Europäisches Patentamt

(19) European Patent Office

Office européen des brevets

(11) Numéro de publication: **0 027 394**
**B1**

(12) # FASCICULE DE BREVET EUROPEEN

(45) Date de publication du fascicule du brevet:
01.02.84

(51) Int. Cl.³ **B 65 G 43/10**

(21) Numéro de dépôt: **80401299.5**

(22) Date de dépôt: **10.09.80**

(54) **Procédé et dispositif de régulation, notamment pour un poste de chargement d'un système de tri automatique.**

(30) Priorité: 04.10.79 FR 7924684

(43) Date de publication de la demande:
22.04.81 Bulletin 81/16

(45) Mention de la délivrance du brevet:
01.02.84 Bulletin 84/5

(84) Etats contractants désignés:
AT BE CH DE FR GB LI NL SE

(56) Documents cités:
DE - A - 2 737 772
GB - A - 988 347
US - A - 2 992 721
US - A - 3 995 735

(73) Titulaire: **TISSMETAL LIONEL-DUPONT, 138 boulevard de la Croix-Rousse, F-69001 Lyon (FR)**

(72) Inventeur: **Demee, Alain René François Armand, 5 Clos du Château Ballainvilliers, F-91160 Longjumeau Essonne (FR)**

(74) Mandataire: **Lepeudry-Gautherat, Thérèse et al, Cabinet Armengaud Jeune Casanova, Akerman, Lepeudry 23 boulevard de Strasbourg, F-75010 Paris (FR)**

BUNDESDRUCKEREI BERLIN

## Procédé et dispositif de régulation, notamment pour un poste de chargement d'un système de tri automatique

La présente invention a pour objet un procédé de régulation, destiné en particulier, mais non exclusivement, à un poste de chargement d'un système de tri automatique, et un dispositif pour la mise en œuvre dudit procédé.

On sait que, dans les systèmes de tri automatique, un certain nombre d'éléments discontinus, tels que des chariots, portant chacun un plateau, et entraînés à grande vitesse, défilent devant un ou plusieurs postes de chargement, qui chargent chaque plateau avec un colis, lequel est ensuite déchargé, par basculement du plateau, dans une goulotte déterminée par le codage du chariot; ce codage résulte lui-même des inscriptions portées sur le colis. Il est donc souhaitable, dans ces systèmes fonctionnant à grande vitesse, qu'un maximum de colis soient chargés donc qu'un minimum de chariots sortent de la zone de chargement sans colis. Or l'arrivée des colis au poste de chargement et l'arrivée des plateaux ne sont pas forcément en phase.

La solution classique pour résoudre ce type de problème consiste à prévoir, à l'intérieur du poste de chargement, des zones de stockage, permettant une régularisation du chargement des colis. Malheureusement, cette solution n'est pas applicable à un système à grand débit, pour lequel on recherche une efficacité maximale; dans ces conditions, un plateau doit être chargé chaque fois qu'il passe au-dessous d'un poste de chargement. En effet l'absence de chargement d'un plateau constitue une perte de temps, qu'il est impossible de compenser, et qui se répercute sur tout le trafic ultérieur.

Un premier objet de l'invention est donc la réalisation d'un poste de chargement qui soit susceptible de charger chaque plateau avec un colis, quels que soient les évènements qui se sont produits en amont du poste de chargement.

Il est bien évident toutefois que, pour atteindre le but recherché par l'invention, le chargement proprement dit du poste de chargement doit être réalisé à une vitesse égale ou supérieure à la vitesse à laquelle les plateaux sont chargés avec les colis par le poste de chargement.

Un autre objet de l'invention est de permettre la transformation d'une arrivée semi-arythmique des colis en une présentation rythmique de ceux-ci sur les plateaux.

Le document GB-A-988 237 décrit un procédé de régulation pour un poste de chargement d'un système de tri automatique de colis, dans lequel des moyens de chargement défilent successivement au droit du poste de chargement pour y être chargés, les colis étant déchargés ultérieurement à des endroits déterminés par codage, et selon ce procédé les colis sont déplacés sur un transporteur qui est accéléré puis décéléré en fonction de la différence de temps entre un premier signal, représentatif du passage de chaque colis sur le transporteur, et un second signal, représentatif du passage du moyen de chargement destiné à recevoir ce colis en un endroit déterminé de son parcours.

Mais, selon ce procédé connu, un opérateur dépose successivement les colis sur un unique transporteur du poste de chargement, et cet unique transporteur déplace chacun des colis à une vitesse lente, jusqu'au moment où chaque colis se trouve au droit d'une cellule photo-électrique, qui commande l'arrêt du transporteur. Le colis demeure ensuite en attente sur le transporteur arrêté, jusqu'au moment où un moyen de chargement déclenche un interrupteur, qui lui-même provoque l'entraînement du transporteur à une vitesse dite rapide, afin de permettre le chargement du colis sur le moyen de chargement correspondant.

Ce procédé connu a pour inconvénients qu'entre d'une part l'opérateur qui dépose et/ou code les colis sur le transporteur et d'autre part, les moyens de chargement, il ne peut se trouver qu'un seul colis sur le transporteur, car sinon le passage au droit de la cellule photo-électrique d'un second colis posé sur ce transporteur, provoque l'arrêt de ce dernier alors que le premier colis, préalablement arrêté en face de la cellule, doit être déplacé à vitesse rapide, ce qui entraîne un fonctionnement défectueux du poste de chargement.

De plus, pour passer de l'arrêt à la vitesse dite rapide, le transporteur doit être fortement accéléré, si l'on veut que la phase de transition soit courte. Mais une forte accélération peut entraîner une certaine dispersion des colis sur le transporteur, en fonction de leur poids notamment, et ne peut être obtenue qu'à l'aide de moyens d'entraînement plus puissants donc plus coûteux. Par contre, se l'on veut que l'accélération soit suffisamment limitée pour éviter toute dispersion notable des colis, et pour que des moyens d'entraînement d'une puissance normale puissent être utilisés, la phase de transition entre l'arrêt et la vitesse rapide est longue, et la longueur du transporteur qui est comprise entre la cellule photo-électrique et l'extrémité du transporteur tournée vers les moyens de chargement est également longue, de sorte que l'intervalle de temps qui doit absolument séparer deux colis successifs est important.

Les deux inconvénients précités ont pour conséquence de limiter dans une mesure importante la cadence de fonctionnement du poste de chargement.

Le problème à la base de la présente invention consiste à perfectionner ce procédé connu, de sorte que la cadence de fonctionnement du poste de chargement, et donc également de l'ensemble du système de tri automatique, soit notablement augmentée.

A cet effet, le procédé selon l'invention se caractérise en ce que le transporteur accéléré puis décéléré est un second transporteur qui est accéléré à partir d'une vitesse normale et auquel les colis sont délivrés par un premier transporteur de sorte que les colis se succèdent avec un intervalle de temps supérieur ou égal à un temps minimum (T) prédéterminé.

Ainsi, selon l'invention, un colis n'est jamais arrêté par le poste de chargement, mais il est éventuellement accéléré de manière à arriver en phase avec le chariot qui doit le recevoir. Cette accélération est suivie d'une décélération, qui a pour but d'amener tous les colis ou paquets à la même vitesse sur les plateaux de chargement, afin d'éviter toute dispersion balistique.

L'invention a également pour objet un dispositif de régulation destiné à la mise en œuvre du procédé propre à l'invention.

Le document US-A-2 992 721 décrit une installation de manipulation et de transport de palettes chargées de pièces moulées et arrivant de manière arythmique d'une machine à mouler les pièces, dans laquelle un dispositif de régulation pour un poste de chargement des palettes sur un convoyeur aérien comprend au moins deux transporteurs, du type transporteur sans fin, et des détecteurs d'objets disposés le long des transporteurs précités.

Mais le dispositif de régulation décrit dans le document US-A-2 992 721 n'est pas directement utilisable afin d'assurer la mise en œuvre du procédé présenté ci-dessus; par l'invention, on se propose d'apporter à des dispositifs connus, du type de celui décrit dans le dernier document précité, des aménagements propres à l'invention afin qu'ils puissent être utilisés, après modifications, à la mise en œuvre du procédé selon l'invention, dans le cas d'un chargement direct des moyens de chargement défilant au droit du poste de chargement par le dernier transporteur du dispositif de régulation.

De plus, on se propose par l'invention de combiner un tel dispositif aménagé avec un chargeur rotatif par l'intermédiaire duquel les moyens de chargement sont chargés.

A cet effet, le dispositif de régulation pour un poste de chargement, du type présenté ci-dessus, se caractérise en ce qu'il comprend un premier détecteur de colis, par exemple une cellule photo-électrique, relié à un circuit de commande comprenant une base de temps et connecté à un dispositif d'entraînement du premier transporteur de manière à arrêter son mouvement si l'intervalle de temps entre les passages des faces avant de deux colis consécutifs est inférieur à un temps minimum (T) prédéterminé, peus à relancer, son mouvement lorsque le temps minimum (T) prédéterminé s'est écoulé depuis le passage de la face avant du colis précédent, et qu'un second détecteur, par exemple une autre cellule photo-électrique, relié au circuit de commande détecte l'arrivée d'un colis sur le second transporteur, et transmet un premier signal correspondant au passage du colis sur le second transporteur au circuit de commande, qui le compare au second signal, représentatif du passage du moyen de chargement destiné à recevoir ce colis, l'information de comparaison étant transmise à un calculateur du circuit de commande qui calcule l'accélération à communiquer au second transporteur.

Pour les paquets de faible poids et de faible encombrement, les accélération et décélération peuvent être effectuées sur un seul transporteur, par exemple sur un seul tapis transporteur. Dans le cas des petits paquets, on peut considérer, en première approximation, que leur masse est ponctuelle et ramenée au centre de gravité du paquet.

Il n'en va pas de même pour les colis lourds et les colis encombrants. Aussi, de préférence, le second transporteur est lui-même constitué d'au moins deux éléments indépendants et consécutifs, dont les vitesses respectives sont réglées de sorte que, pour un paquet donné, les deux éléments du tapis présentent la même vitesse lors du transfert d'un paquet d'un élément sur l'autre.

Selon une autre caractéristique de l'invention, le second transporteur précité étant constitué de deux éléments indépendants et consécutifs, les mouvements d'accélération et de décélération du second élément sont décalés dans le temps par rapport aux mêmes mouvements du premier élément. On a en effet constaté que, lors du transfert d'un objet entre un tapis convoyeur et un autre tapis convoyeur, la distance parcourue par l'objet dépendait très sensiblement de la longueur et de la position de son centre de gravité. Ce mode particulier de mise en œuvre du procédé de régulation selon l'invention permet de remédier à cet inconvénient, les mouvements d'accélération et de décélération n'étant réalisés que lorsque le colis repose tout entier sur l'un des tapis.

D'autres caractéristiques et avantages de l'invention apparaîtront au cours de la description qui va suivre de modes particuliers de réalisation donnés uniquement à titre d'exemples non limitatifs en regard des figures qui représentent:

la figure 1 une vue de dessus d'un système de tri automatique faisant appel à un chargeur rotatif;

la figure 2 une vue en élévation du même système;

la figure 3 un schéma de principe de l'invention;

les figures 4a et 4e des schémas permettant d'expliquer le fonctionnement d'un dispositif régulateur selon l'invention utilisé avec un chargeur rotatif;

la figure 5 un chronogramme montrant l'évolution des vitesses de deux tapis de la figure 3 lorsqu'une accélération est nécessaire;

les figures 6 et 7 des détails de réalisation du chargeur rotatif.

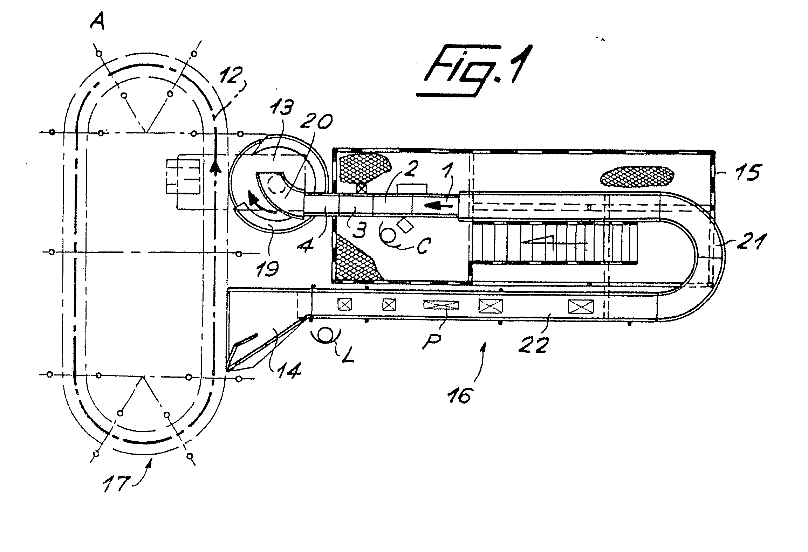

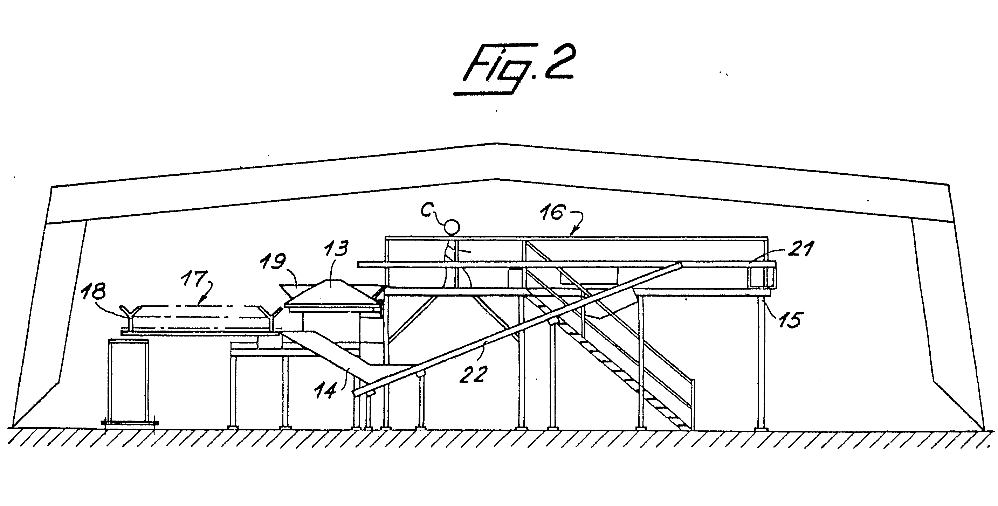

Pour mieux comprendre le problème qui a été résolu par l'invention on se reportera tout d'abord aux figures 1 et 2 qui représentent un système particulier de tri automatique de colis. Sur la figure 1 apparaît un poste de chargement 16 et un transporteur de tri 17. Le transporteur de tri 17 consiste essentiellement en une chaîne 12 sur laquelle sont montés des chariots (non représentés), dont chacun peut basculer en un endroit quelconque de la chaîne pour déverser les colis qu'il transporte. Le poste de chargement 16 comporte une plate-forme 15 sur laquelle un opérateur chargé du codage, C, détermine, en fonction des informations portées sur le colis qui se trouve devant lui, sur un tapis transporteur 2, à quel endroit celui des chariots entraînés par la chaîne 12, qui recevra ultérieurement le colis se trouvant actuellement sur le tapis 2, devra déverser ce colis. De part et d'autre du tapis 2 se trouvent un premier tapis transporteur 1, en amont du tapis 2, et deux autres tapis transporteurs 3 et 4, en aval du tapis 2. Les colis P sont introduits par une goulotte 14 (voir aussi la figure 2), soit automatiquement, soit par une personne L, qui assure éventuellement la présentation des colis, c'est-à-dire leur disposition ordonnée. Les colis P sont ensuite élevés jusque sur la plate-forme 15 par un tapis élévateur 22, suivi par un transporteur 21, à bandes ou à rouleaux; les chariots sont codés et les colis sont déversés sur le transporteur de tri, soit, comme cela apparaît sur les figures 1 et 2, par l'intermédiaire d'un chargeur rotatif 13, qui est en lui-même connu et ne fait pas partie de l'invention, soit directement sur les plateaux 18 des chariots du transporteur de tri.

Les tapis 1 et 2, constituant des moyens d'amenée des colis à une vitesse réglable, choisie à une valeur donnée en fonction de l'installation et non continûment variable au cours du fonctionnement, peuvent être remplacés par tout autre moyen de présentation et de codage, par exemple par un transporteur à bande zonée et à vitesse ajustable mécaniquement ou électriquement, délivrant un à un les colis au système en assurant toutefois un minimum de temps entre deux colis.

Le problème qui est résolu par l'invention est celui du déchargement d'un colis au moment précis où un chariot passe au-dessous du poste de chargement.

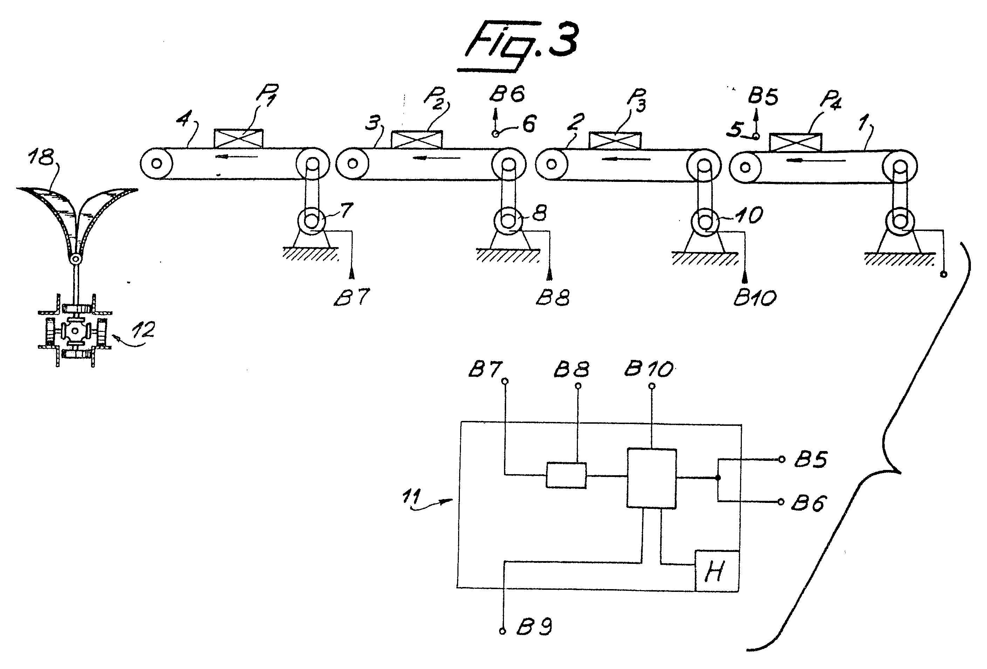

La figure 3 est un schéma de principe de l'invention sur lequel on a représenté les tapis transporteurs 3 et 4. Comme celà a été dit précédemment, en principe l'invention ne nécessite que les deux tapis transporteurs 3 et 4. Toutefois, pour des raisons pratiques et mécaniques il est souhaitable de disposer d'un ensemble de transporteurs, et par exemple de quatre transporteurs, comme représenté sur la figure 3. A la sortie du transporteur 1, une cellule photo-électrique 5 détecte le passage d'un colis $P_4$ et transmet cette information à la borne $B_5$ d'un circuit électronique de commande 11. Le circuit de commande 11 compare ce signal à des signaux d'horloge, émis par une base de temps H. Si l'intervalle de temps entre les passages des fronts avant de deux colis successifs est inférieur à une durée déterminée T, le circuit de commande 11 agit par sa borne $B_{10}$ sur le moteur

d'entraînement 10 du tapis 2 de façon à arrêter celui-ci jusqu'à ce que l'intervalle de temps prenne la valeur déterminée. Le fonctionnement en tout ou rien du moteur d'entraînement 10 permet d'assurer un débit de colis égal au débit des chariots destinés à recevoir les colis. Cet intervalle de temps déterminé est en particulier fonction de la vitesse d'avance des chariots du transporteur de tri. Si par exemple cet intervalle de temps est de 2 secondes, on est sûr que tous les paquets parvenant sur le transporteur 3 arriveront sur celui-ci avec des intervalles de temps qui seront supérieurs ou égaux à 2 secondes. Lorsque l'intervalle de temps entre deux colis est strictement égal à 2 secondes, les deux colis poursuivent normalement leur trajet sur les transporteurs 3 et 4, qui, à ce moment, tournent à des vitesses égales à celle du transporteur 2. Cet intervalle de 2 secondes doit correspondre à l'intervalle entre les passages de deux chariots consécutifs, de façon que le premier colis soit chargé dans un chariot et le second colis dans le chariot à charger immédiatement après. Si par exemple le second colis arrive avec un retard de 2,5 secondes sur le premier colis, le second colis ne pourra pas être chargé sur le second chariot, qui repartira à vide et provoquera une perte importante de débit par le non-chargement d'un chariot à chaque fois qu'il n'y aura pas coïncidence colis/chariot.

Selon l'invention une seconde cellule photo-électrique 6 détecte l'instant du passage de chaque colis. Cette cellule 6 est reliée à la borne $B_6$ du circuit de commande 11, qui inclut un calculateur. Le circuit de commande 11 reçoit par ailleurs, sur sa borne $B_9$, une information relative au passage d'un chariot déterminé, destiné à recevoir le colis considéré, et il calcule l'intervalle de temps à rattraper pour que le colis se trouve à la sortie du poste de chargement lorsque le plateau 18 du chariot passera au-dessous du poste de chargement pour recevoir ce colis. Une fois déterminé le temps à rattraper, le circuit de commande 11 agit par ses bornes $B_7$ et $B_8$ sur les moteurs électriques à courant continu, 7 et 8, entrainant les tapis transporteurs 3 et 4, de manière à leur communiquer une accélération puis une décélération, celles-ci ne se produisant que lorsque le colis est complètement porté par un seul transporteur, de façon à n'assurer aucun transfert de colis d'un tapis transporteur à l'autre, lorsque ces tapis sont animés de vitesses de déplacement différentes, ce que entraînerait une dispersion gênante des colis, en raison des différentes positions occupées par les centres de gravité des colis successifs.

Le procédé qui vient être décrit ci-dessus s'applique quel que soit le mode de chargement des chariots, qu'il s'agisse d'un chargement direct ou d'un chargement effectué par l'intemédiaire d'un chargeur rotatif tel que 13 (figures 1 et 2) ou tout autre système de tri rythmé par la machine. Dans ce dernier cas, toutefois, le problème à résoudre est très sensiblement simplifié dans la mesure où le chargeur rotatif constitue lui-même un moyen permettant de synchroniser l'arrivée des paquets ou colis, qui ont été introduits en haut du chargeur d'une manière partiellement arythmique.

Dans l'exemple de réalisation qui sera donné maintenant, le système de tri automatique est supposé muni d'un chargeur rotatif. Le chargeur rotatif utilisé dans la présente invention peut être celui qui apparaît en vue par-dessus sur la figure 1 et en vue de côté sur la figure 2. Il est constitué par un cône tournant 13 et une rive conique fixe 19, les génératrices respectives du cône et de la rive étant orthogonales. Le cône 13 est relié mécaniquement au groupe d'entraînement du transporteur de tri 17, par exemple par une chaîne de transmission du mouvement de rotation de telle façon qu'il fasse un demi-tour sur lui-même pendant la durée du passage de quatre chariots à proximité dudit cône 13. Ce cône porte deux ailettes verticales 25 (voir figure 7) qui ont pour but d'entraîner les colis le long de la rive 19. Les colis sont chargés sur la partie centrale du cône par le transporteur à bande 4, par l'intermédiaire d'une glissière 20 (figure 1); ils glissent sur une génératrice du cône 13 jusqu'à ce qu'ils atteignent la partie opposée de la rive conique. La force centrifuge plaque le colis sur cette rive et le colis attend que l'ailette d'entraînement commence à le faire tourner. Ainsi, le colis est automatiquement »recalé« par rapport à l'ailette verticale. Le colis est entraîne par glissement sur la rive 19, et lorsque ladite rive est interrompue, le colis, laissé libre, commence un mouvement complexe, qui le conduit sur le plateau du chariot prévu.

Selon un mode de réalisation particulier de l'invention, les plateaux 18 du transporteur de tri présentent en section la forme d'ailes de mouette, une aile de chaque plateau pouvant basculer pour que le colis tombe à un endroit déterminé, ce basculement étant commandé par un mécanisme dépendant du codage du chariot. Les plateaux à ailes de mouette, 18, sont disposés de sorte que l'une des ailes soit exactement dans le prolongement d'une génératrice du cône 13 et juste au-dessous de celle-ci, de sorte que les colis passent directement, et sans choc notable, du cône aux plateaux portés par le chariot correspondant; pour que la synchronisation soit bonne, la vitesse tangentielle du bord extérieur du cône est identique à la vitesse de défilement des plateaux comme celà apparaît sur les figures 6 et 7.

Comme il a été dit précédemment, la seule action du chargeur rotatif, assurant la synchronisation du déchargement des colis avec la présentation des plateaux portés par les chariots, ne suffit pas à résoudre le problème général tel qu'il a été posé ci-dessus, compte-tenu de ce qu'il existe sur le chargeur rotatif des zones interdites encadrant chaque ailette verticale. Dans ces conditions, un dispositif de régulation selon l'invention est nécessaire.

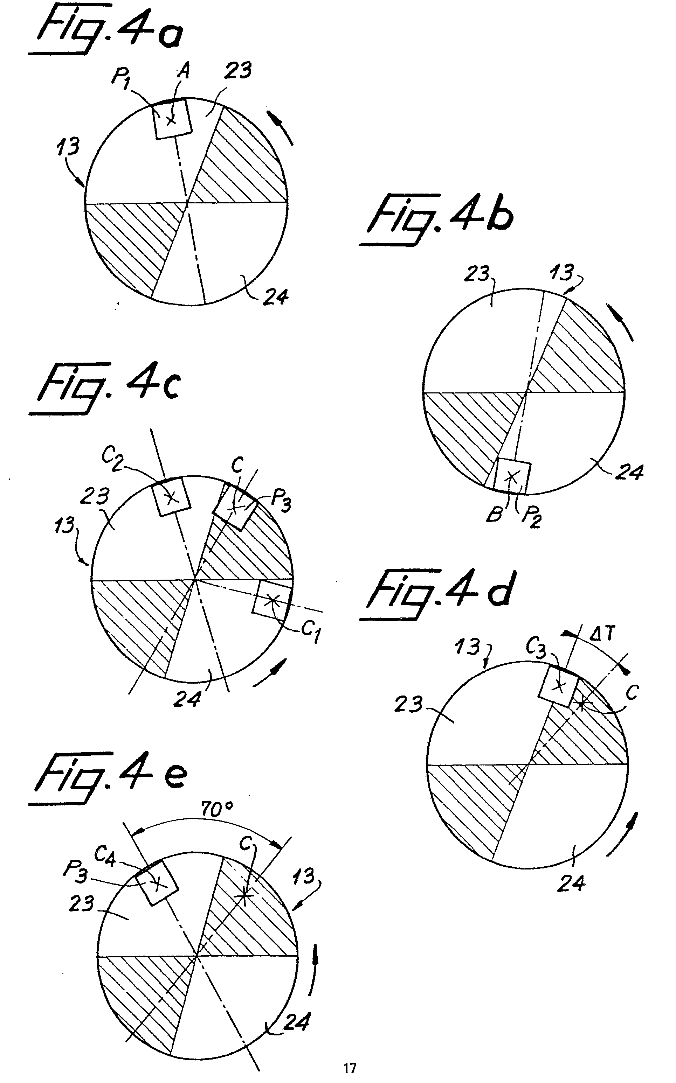

On a représenté sur les figures 4a à 4d l'évolution de la position de chargement de colis consécutifs. Chacun des schémas représente le cône 13 en vue par-dessus, les zones hachurées figurant les secteurs dans lesquels les colis ne doivent pas tomber, les ailettes d'entraînement, non représentées, étant bien entendu incluses dans ces zones. Sur la figure 4a, le point A indique le point de chargement d'un colis $P_1$. La figure 4b représente le point B de chargement d'un second colis $P_2$. Les points A et B sont chargés respectivement dans les zones autorisées 23 et 24. Par contre, sur la figure 4c le colis $P_3$ est représenté chargé, au point C, dans une zone interdite, ce qui ne doit pas pouvoir être le cas. Le colis $P_1$ a été chargé sur une zone correspondant au premier plateau, alors que le colis $P_2$ a été chargé dans une zone correspondant au second plateau. Si le temps de transfert du colis $P_3$ est augmenté, il ne sera chargé qu'en $C_1$ sur la zone 24, correspondant alors au quatrième plateau, et il y aura donc une perte de débit puisque le troisième plateau ne sera pas chargé. Par contre, si l'on arrive à avancer l'instant d'arrivée du colis $P_3$ de façon qu'il soit chargé au point $C_2$, ledit colis $P_3$ sera bien chargé sur le troisième plateau. Pour se faire, on peut essayer de calculer le temps $\Delta T$ à rattraper pour arriver juste au droit de la zone interdite, en $C_3$, comme cela est représenté sur la figure 4d. Toutefois, de préférence, on utilise la solution qui est schématisée sur la figure 4e, dans laquelle le colis $P_3$ est considérablement avancé, d'un angle de l'ordre de 70° couvrant dans l'application la zone interdite, jusqu'en $C_4$, l'excès d'avance étant pris en charge par les ailettes. Celà signifie que, conformément à l'invention, et dans le cas où l'on fait appel à un chargeur rotatif, il ne sera nécessaire d'avoir que deux vitesses de transport, une première vitesse, normale, et une seconde vitesse, dite vitesse accélérée, permettant de gagner un temps déterminé sur la durée du transport. Dans ces conditions, le mode opératoire devient binaire, c'est-à-dire qu'après avoir mesuré l'intervalle de temps entre l'information correspondant au passage d'un chariot devant un détecteur et celle correspondant au passage de la face avant du colis devant la cellule 6 (figure 3), le dispositif de commande 11 décide d'accélérer ou de ne pas modifier la vitesse des tapis transporteurs 3 et 4. Le détecteur du passage du chariot peut être constitué par une cellule photo-électrique, un détecteur de proximité de tout type approprié, voire même par un détecteur mécanique à lame de contacteur. Ce détecteur est en général disposé au voisinage du transporteur de tri 17, d'une distance déterminée en amont du point d'injection du colis sur ce dernier.

Comme le transporteur de tri 17 est entraîné à une vitesse constante connue, l'instant du passage de chaque chariot au niveau du point d'injection peut être aisément déterminé avec toute précision requise.

Dans l'exemple de réalisation représenté sur les figures 1 et 2, comme le transporteur de tri 17 se présente sous la forme d'une boucle fermée, le détecteur du passage des chariots peut en fait être disposé en n'importe quelle position choisie le long de la trajectoire de la chaîne 12.

Lorsque le dispositif comprend un chargeur rotatif tel que 13, dont la vitesse de rotation est liée à la vitesse de déplacement du transporteur de tri 17, du fait de la liaison par chaîne assurant l'entraînement en rotation du chargeur rotatif 13 à partir du groupe d'entraînement du transporteur de tri 17, il est également possible de disposer le détecteur associé au passage des chariots au voisinage du chargeur rotatif 13. Ainsi, l'accélération, c'est-à-dire le passage de la vitesse de transport normale à la vitesse de transport accélérée, peut être réalisée sur le tapis transporteur 3, alors que la décélération, c'est-à-dire le retour à la vitesse de transport normale, peut être réalisée sur le tapis transporteur 4.

Dans un mode de réalisation particulier, les dimensions des paquets variant entre 510 × 360 × 300 mm et 180 × 100 × 50 mm, avec un poids maximum de 30 kg environ, la longueur des tapis transporteur 1 à 4 est de 0,65 m, l'espace les séparant étant de 0,09 m, ces longueurs étant choisies de façon à assurer l'accélération ou la décélération d'un seul paquet sans gêner celui qui le précède ou celui qui le suit. Dans ce but, il est nécessaire d'assurer un intervalle de temps déterminé entre les colis successifs; dans l'exemple choisi cet intervalle de temps est de 2 secondes, ce qui assure, même avec des paquets de 510 mm de long, la libération du tapis 3 de la face arrière du premier paquet avant l'arrivée sur ce même tapis 3 de la face avant du deuxième paquet, pour une vitesse de transport de 36 m par minute.

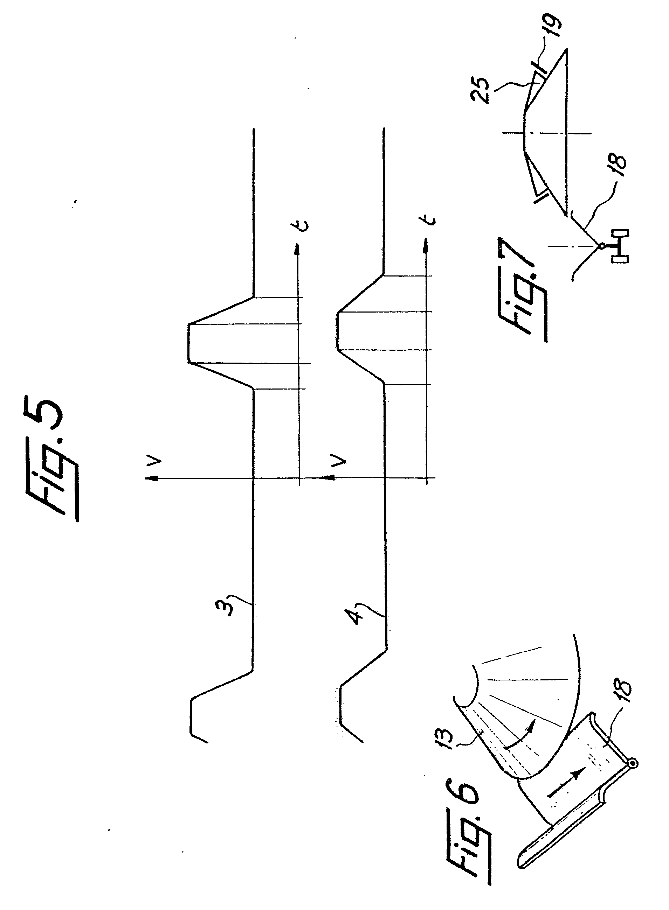

Afin de réaliser avec une bonne précision des différentes variations de vitesse, les transporteurs à bande 3 et 4 sont commandés de préférence par des moteurs à courant continu à faible inertie, couplés chacun avec une platine de régulation électronique, qui, à l'aide d'une dynamo tachymétrique et d'une rampe statique, permet d'assurer les accélérations, décélérations et vitesses souhaitées. Les ordres de début d'accélération et de décélération sont donnés par le circuit de commande 11. Pour les informations d'arrivée des paquets ou colis sur la bande 3, le dispositif de commande 11 est aménagé comme si tous les colis avaient la même longueur. La figure 5 est un chronogramme représentant les variations de vitesse au cours du temps, respectivement des transporteurs 3 et 4. On voit sur cette figure que les mouvements d'accélération et de décélération du tapis 4 sont retardés de quelques millisecondes par rapport à ceux du tapis 3. On notera que, dans le cas de l'utilisation d'un système de tri à chargeur rotatif, les vitesses sont déterminées une fois pour toute, alors qu'il n'en va pas de même pour les installations non munies d'un tel chargeur, pour lesquelles les vitesses des tapis transporteurs doivent être calculées pour chaque colis. Ce calcul ne présente d'ailleurs aucune difficulté puisqu'il s'agit uniquement de déterminer la valeur du retard qu'a pris le colis par rapport au mouvement du chariot et regarder dans une table précalculée la vitesse correspondante. Pour faciliter le calcul de régulation de la vitesse de transport des colis, dans ce cas, il est avantageux d'utiliser l'occulatation de la cellule photo-électrique 6 pour déterminer la longueur réelle de chaque colis, la vitesse de déplacement du tapis 3 étant connue.

**Revendications**

1. Procédé de régulation pour un poste de chargement (16) d'un système de tri automatique de colis (P), dans lequel des moyens de chargement (18) défilent successivement au droit du poste de chargement pour y être chargés, les colis (P) étant déchargés ultérieurement à des endroits déterminés par codage, et selon lequel les colis (P) sont déplacés sur un transporteur (3−4) qui est accéléré, puis décéléré en fonction de la différence de temps entre un premier signal, représentatif du passage de chaque colis (P) sur ledit transporteur (3−4), et un second signal, représentatif du passage du moyen de chargement (18) destiné à rececoir ledit colis (P) en un endroit déterminé de son parcours, caractérisé en ce que le transporteur accéléré puis décéléré est un second transporteur (3−4) accéléré à partir d'une vitesse normale, et auquel les colis (P) sont délivrés par un premier transporteur (1−2) de sorte que les colis (P) se succèdent avec un intervalle de temps supérieur ou égal à un temps minimum (T) prédéterminé.

2. Procédé selon la revendication 1, caractérisé en ce que le second transporteur (3−4) est constitué de deux éléments (3, 4) indépendants et consécutifs, les mouvements d'accélération et de décélération du second élément (4) étant décalés dans le temps par rapport aux mêmes mouvements du premier élément (3).

3. Dispositif de régulation pour un poste de chargement, du type comprenant au moins deux transporteurs (1−2, 3−4) et des détecteurs d'objets (5, 6) disposés le long des transporteurs (1, 2, 3, 4) précités ledit dispositif étant destiné à la mise en œuvre du procédé selon la revendication 1, caractérisé en ce qu'il comprend un premier détecteur (5) de colis (P), par exemple une cellule photo-électrique, relié à un circuit de commande (11) comprenant une base de temps (H) et connecté à un dispositif d'entraînement (10) du premier transporteur (1−2) de manière à arrêter son mouvement si l'intervalle de temps entre les passages des faces avant de deux colis (P) consécutifs est inférieur à un temps minimum (T) prédéterminé, puis à relancer son mouvement lorsque le temps minimum (T) prédéterminé s'est écoulé depuis le passage de la face avant du colis (P) précédent, et qu'un second détecteur (6), par exemple une cellule photo-électrique, relié au circuit de commande (11) détecte l'arrivée d'un colis (P) sur le second transporteur (3—4), et transmet un premier signal (B₆) correspondant au passage du colis (P) sur le second transporteur (3—4), au circuit de commande (11) qui le compare au second signal (B₉) représentatif du passage du moyen de chargement (18) destiné à recevoir ce colis (P), l'information de comparaison étant transmise à un calculateur du circuit de commande (11) qui calcule l'accélération à communiquer audit second transporteur (3—4).

4. Dispositif selon la revendication 3, caractérisé en ce que lesdits premier et second transporteur sont chacun constitués par au moins deux tapis transporteurs indépendants et consécutifs (1, 2, 3, 4), les deux tapis transporteurs (3, 4) du second transporteur étant susceptibles d'être animés de vitesses différentes et le premier détecteur (5) étant disposé à la sortie du premier tapis transporteur (1) du premier transporteur.

5. Dispositif selon la revendication 4, caractérisé en ce que l'extrémité du second tapis transporteur (4) du second transporteur débouche, par l'intermédiaire d'une glissière (20) au-dessus d'un chargeur rotatif à cône (13) et en ce que le circuit de commande (11) provoque des accélérations successives puis des décélérations successives des deux tapis transporteurs consécutifs (3, 4) du second transporteur.

6. Dispositif selon la revendication 3, caractérisé en ce que le premier transporteur, délivrant les colis (P) se succédant avec un intervalle de temps supérieur ou égal à un temps minimum (T) prédéterminé ajustable est un tapis zoné.

7. Dispositif selon l'une des revendications 3 à 6 précédentes, caractérisé en ce que les deux transporteurs sont constitués par un tapis zoné, régulé en vitesse et en position avec des zones autorisées délimitées sur un chargeur rotatif (13) auquel le tapis zoné délivre les colis (P), ainsi qu'avec les moyens de chargement (18) auxquels le chargeur rotatif (13) délivre les colis (P).

8. Dispositif selon l'une des revendications 3 à 7 précédentes, caractérisé en ce que chacun des moyens de chargement est constitué par un plateau (18) à ailes de mouette.

9. Dispositif selon la revendication 8, caractérisé en ce que le poste de chargement (16) comprend un chargeur rotatif conique (13) et en ce que les plateaux en ailes de mouette (18) sont disposés de sorte que l'une de leurs ailes soit dans le prolongement d'une génératrice du cône (13) et juste au-dessous de celle-ci, une rive fixe (19) étant en retrait par rapport à la base du cône (13) ainsi que par rapport à l'extrémité d'ailettes verticales (25) portées par le chargeur rotatif conique.

**Patentansprüche**

1. Verfahren zur Regelung für eine Beschickungsstation (16) eines Systems zum automatischen Sortieren von Paketen (P), in dem Transportmittel (18) nacheinander an der Beschickungsstation vorbeilaufen, um dort beladen zu werden, wobei die Pakete (P) letztlich an durch Kodierung bestimmten Stellen abgeladen werden, und bei dem die Pakete (P) auf einem Förderer (3—4) verfahren werden, der in Abhängigkeit von dem Zeitunterschied zwischen einem ersten Signal, das für den Durchlauf jedes auf dem genannten Förderer (3—4) befindlichen Pakets (P) kennzeichnend ist, und einem zweiten Signal beschleunigt und danach verzögert wird, das für den Durchlauf des Transportmittels kennzeichnend ist, das dazu bestimmt ist, an einer festgelegten Stelle seiner Bewegungsbahn das besagte Paket aufzunehmen, dadurch gekennzeichnet, daß der beschleunigte und danach verzögerte Förderer ein zweiter Förderer (3—4) ist, der ausgehend von einer Normalgeschwindigkeit beschleunigt wird und dem die Pakete (P) durch einen ersten Förderer (1—2) in der Weise zugebracht werden, daß die Pakete (P) mit einem Zeitintervall aufeinanderfolgen, das größer oder gleich einer vorbestimmten Mindestzeitdauer (T) ist.

2. Verfahren nach Anspruch 1, dadurch gekennzeichnet, daß der zweite Förderer (3—4) aus zwei aufeinanderfolgenden unabhängigen Förderelementen (3, 4) gebildet ist und daß die Beschleunigungs- und Verzögerungsbewegungen des zweiten Förderelements (4) in bezug auf die gleichen Bewegungen des ersten Förderelements (3) zeitverschoben sind.

3. Vorrichtung zur Regelung für eine Beschickungsstation solcher Art, die mindestens zwei Förderer (1—2, 3—4) sowie Fördergutdetektoren (5, 6) aufweist, die längs der genannten Förderer (1, 2, 3, 4) angeordnet sind, welche Vorrichtung zum Durchführen des Verfahrens gemäß Anspruch 1 bestimmt ist, dadurch gekennzeichnet, daß sie einen ersten Detektor (5) für Pakete (P) aufweist, beispielsweise einen lichtelektrischen Wandler, der mit einer Steuerschaltung (11) verbunden ist, die eine Zeitbasis (H) aufweist und mit einer Antriebseinrichtung (10) des ersten Förderers (1—2) in der Weise verbunden ist, daß sie dessen Bewegung anhält, wenn das Zeitintervall zwischen den Durchgängen der Vorderseiten zweier aufeinanderfolgender Pakete (P) kürzer ist als eine vorbestimmte Mindestzeitdauer (T), und danach seine Bewegung wieder in Gang setzt, wenn die vorbestimmte Mindestzeitdauer (T) nach dem Durchgang der Vorderseite des vorausgehenden Paketes (P) verstrichen ist, daß ein zweiter Detektor (6), beispielsweise ein lichtelektrischer Wandler, vorhanden ist, der mit der Steuerschaltung (11) verbunden ist, die Ankunft eines Paketes (P) auf dem zweiten Förderer (3—4) ermittelt und ein erstes Signal (B₆) entsprechend dem Durchgang des Paketes (P) auf den zweiten Förderer (3—4) zu der Steuerschaltung (11) zuführt, die dieses mit einem zweiten Signal (B₉) vergleicht, das den Durchgang des Transportmittels (18) darstellt, das dazu bestimmt ist, dieses Paket (P) aufzunehmen, und daß die Vergleichsinformation auf einen Rechner der Steuerschaltung (11) übertragen wird, der die dem zweiten Förderer (3—4) zu vermittelnde Beschleunigung berechnet.

4. Vorrichtung nach Anspruch 3, dadurch gekennzeichnet, daß der erste und der zweite Förderer aus mindestens zwei unabhängigen und aufeinanderfolgenden Förderbändern (1, 2, 3, 4) gebildet sind, daß die beiden Förderbänder (3, 4) des zweiten Förderers mit unterschiedlichen Geschwindigkeiten antreibbar sind und daß der erste Detektor (5) am Ausgang des ersten Förderbandes (1) des ersten Förderers angeordnet ist.

5. Vorrichtung nach Anspruch 4, dadurch gekennzeichnet, daß das Ende des zweiten Förderbandes (4) des zweiten Förderers vermittels einer Führungsbahn (20) oberhalb eines konischen Rotationsbeschickers (13) mündet und daß die Steuerschaltung (11) aufeinanderfolgende Beschleunigungen und danach aufeinanderfolgende Verzögerungen der beiden aufeinanderfolgenden Förderbänder (3, 4) des zweiten Förderers hervorruft.

6. Vorrichtung nach Anspruch 3, dadurch gekennzeichnet, daß der erste Förderer, der die Pakete (P) so zuliefert, daß sie mit einem Zeitintervall aufeinanderfolgen, das größer oder gleich einer einstellbaren vorbestimmten Mindestzeitdauer (T) ist, ein in Förderbereiche unterteiltes Band ist.

7. Vorrichtung nach einem der vorausgehenden Ansprüche 3 bis 6, dadurch gekennzeichnet, daß jeder der zwei Förderer durch ein in Förderbereiche unterteiltes Förderband gebildet ist, das in bezug auf Geschwindigkeit und Position auf erlaubte Zonen, die auf einem Rotationsbeschicker (13) abgegrenzt sind, dem das in Förderbereiche unterteilte Förderband die Pakete (P) zuliefert, sowie auf Transportmittel (18) abgestimmt ist, denen der Rotationsbeschicker (13) die Pakete (P) zuliefert.

8. Vorrichtung nach einem der vorausgehenden Ansprüche 3 bis 7, dadurch gekennzeichnet, daß jedes der Transportmittel durch eine möwenflügelförmige Ladefläche (18) gebildet ist.

9. Vorrichtung nach Anspruch 8, dadurch gekennzeichnet, daß die Beschickungsstation (16) einen konischen Roationsbeschicker (13) aufweist, daß die möwenflügelförmigen Ladeflächen (18) so angeordnet sind, daß der eine ihrer Flügel eine Verlängerung der einen Erzeugenden des Konus (13), unmittelbar unterhalb desselben, bildet, und daß eine feste Randeinfassung (19) in bezug auf die Basis des Kegels (13) sowie in bezug auf das Ende von vertikalen Flügeln (25), die von dem konischen Rotationsbeschicker getragen sind, zurückgesetzt eingebaut ist.

## Claims

1. Control method for a loading station (16) of an automatic parcel (P) sorting system, in which the loading means (18) run successively past abreast of the loading station so that they may be loaded thereat, the parcels (P) subsequently being discharged at points established by coding, and according to which the parcels (P) are displaced on a conveyor (3—4) which is accelerated and then decelerated as a function of the time difference between a first signal representing the passage of each parcel (P) on the said conveyor (3—4) and a second signal representing the passage of the loading means (18) intended to receive the said parcel (P) at a particular point of its trajectory, characterised in that the accelerated and then decelerated conveyor is a second conveyor (3—4) accelerated from a normal speed, and to which the parcels (P) are delivered by a first conveyor (1—2) so that the parcels (P) follow each other with a time interval greater than or equal to a predetermined minimum period (T).

2. Method according to claim 1, characterised in that the second conveyor (3—4) comprises two independent and consecutive elements (3, 4), the accelerative and decelerative displacements of the second element (4) being chronologically staggered with respect to the same displacements of the first element (3).

3. Control apparatus for a loading station, of the kind comprising at least two conveyors (1—2, 3—4) and object detectors (5, 6) positioned along the conveyors (1, 2, 3, 4), the said apparatus being intended for application of the method according to claim 1, characterised in that it comprises a first parcel (P) detector (5), for example a photo-electric cell, connected to a control circuit (11) comprising a time base (H) and connected to a device (10) for driving the first conveyor (1—2) in such manner as to interrupt its displacement if the time interval between the run-past of the leading surfaces of two consecutive parcels (P) is shorter than a predetermined minimum period (T), and then such as to restart its displacement when the predetermined minimum period (T) has elapsed since the run-past of the leading surface of the preceding parcel (P), and that a second detector (6), for example a photo-electric cell connected to the control circuit (11) detects the arrival of a parcel (P) on the second conveyor (3—4), and transmits a first signal ($B_6$) corresponding to the run-past of the parcel (P) on to the second conveyor (3—4), to the control circuit (11) which compares it to the second signal ($B_9$) representing the run-past of the loading means (18) intended to receive this parcel (P), die comparison datum being transmitted to a calculator of the control circuit (11) which calculates the acceleration which is to be imparted to the said second conveyor (3—4).

4. Device according to claim 3, characterised in that the said first and second conveyors are each formed by at least two independent and consecutive conveyor belts (1, 2, 3, 4), the wo conveyor belts (3, 4) of the second conveyor being arranged to have different speeds imparted to them and the first detector (5) being located at the exit from the first conveyor belt (1) of the first conveyor.

5. Device according to claim 4, characterised in that the end of the second conveyor belt (4) of the second conveyor leads via a slide (20) to above a rotary cone loader (13) and in that the control circuit (11) causes successive accelerations and then successive decelerations of the two consecutive conveyor belts (3, 4) of the second conveyor.

6. Device according to claim 3, characterised in that the first conveyor supplying the parcels (P) following each other with a time lag greater than or equal to an adjustable predetermined minimum period (T) is a zoned belt.

7. Device according to one of the preceding claims 3 to 6, characterised in that the two conveyors are formed by a zoned belt governed as regards speed and position, with authorised areas delimited on a rotary loader (13) to which the zoned belt delivers the parcels (P), as well as with the loading means (18) to which the parcels (P) are delivered by the rotary loader (13).

8. Device according to one of the preceding claims 3 to 7, characterised in that each of the loading means is formed by a gull-wing platform (18).

9. Device according to claim 8, characterised in that the loading station (16) comprises a conical rotary loader (13) and in that the gull-wing platforms (18) are situated in such manner that one of their wings is in the extension of one generatrix of the cone (13) and just below the same, a fixed rim (19) being set back from the base of the cone (13) as well as from the extremity of vertical fins (25) carried by the conical rotary loader.

*Fig.1*

0 027 394

_Fig.2_

Fig.3

0 027 394

0 027 394

*Fig.4a*

*Fig.4b*

*Fig.4c*

*Fig.4d*

*Fig.4e*

17

# _Fig_.5

# _Fig_.6

# _Fig_.7